# EUROPÄISCHE PATENTANMELDUNG

(11) **EP 2 587 638 A1**
(43) Veröffentlichungstag der Anmeldung: **01.05.2013**
(21) Anmeldenummer: 11186755.2
(22) Anmeldetag: 26.10.2011
(51) Int. Cl.: H02K 3/40

(54) **Außenglimmschutz für eine elektrische Maschine**

(71) Anmelder: Siemens Aktiengesellschaft, 80333 München (DE)
(72) Erfinder: Brockschmidt, Mario, 45131 Essen (DE); Pohlmann, Friedhelm, 45355 Essen (DE); Kempen, Stefan, 44388 Dortmund (DE); Schmidt, Guido, 42799 Leichlingen (DE); Staubach, Christian, 45768 Marl (DE)

(57) **Zusammenfassung**

Es wird ein Außenglimmschutz (16) für einen mit einer Hauptisolierschicht (11) ummantelten Leiterstab (7) einer elektrischen Maschine (1) angegeben. Der Außenglimmschutz (16) umfasst eine erste Lage (21), welche die Hauptisolierschicht (11) ummantelt, sowie eine zweite Lage (20), welche wiederum die erste Lage (21) ummantelt. Jede der Lagen (20,21) umfasst eine leitfähige, imprägnierbare Schicht (22,23), welche jeweils mit einer Gleitschicht (25,26) versehen ist, wobei die Gleitschicht (25,26) der beiden Lagen (20,21) einander zugewandt sind. Jede der Gleitschichten (25,26) weist zudem jeweils mindestens eine Aussparung (30,31) auf, wobei durch diese Aussparungen (30,31) hindurch die beiden leitfähigen Schichten (22,23) mit Hilfe einer dauerhaft elastischen, elektrisch leitenden Verbindung (32) miteinander verbunden sind.

## Beschreibung

Die Erfindung bezieht sich auf einen Außenglimmschutz für eine elektrische Maschine, insbesondere auf einen Außenglimmschutz für einen mit einer Hauptisolierschicht ummantelten Leiterstab der elektrischen Maschine. Die Erfindung bezieht sich weiterhin auf ein Glimmschutzband zur Herstellung des Außenglimmschutzes, sowie auf eine elektrische Maschine mit einem solchen Außenglimmschutz.

Mit dem Begriff "elektrische Maschine" ist allgemein ein Energiewandler bezeichnet, der zwischen elektrischer und mechanischer Energie wandelt, nämlich ein elektrischer Motor oder ein Generator. Eine solche elektrische Maschine umfasst üblicherweise einerseits einen ortsfesten Stator (oder Ständer) sowie einen rotierenden Rotor (oder Läufer). Bei der elektrischen Maschine handelt es sich insbesondere um einen Turbogenerator, welcher in einem Kraftwerk zur Umwandlung von mechanischer in elektrische Energie dient.

Ein Turbogenerator ist derzeit meist als dreisträngige Drehstrom-Synchronmaschine mit einem massiven zwei- oder vierpoligen Läufer realisiert. Der Leistungsbereich eines solchen Turbogenerators reicht typischerweise von ca. 20 MVA bis ca. 2000 MVA.

Der Stator eines üblichen Synchrongenerators umfasst eine Vielzahl von sogenannten Ständer- oder Statorwicklungen, in welchen durch induktive Wechselwirkung mit dem rotierenden, mit einem konstanten Strom beaufschlagten Rotor eine Wechselspannung induziert wird. Die Statorwicklungen sind in einem sogenannten Blechpaket aufgenommen. Dieses dient unter anderem zur Führung und Verstärkung des magnetischen Feldes. Zur Verringerung von Verlusten durch Wirbelströme ist das gesamte Blechpaket aus dünnen, gegeneinander isolierten Blechen aufgebaut. Die Statorwicklungen bestehen aus einer Vielzahl von Stäben, deren jeweilige Mittelstücke (der sogenannte "Aktivteil") in Nuten des Blechpakets eingelegt sind. Die einzelnen Stäbe treten am sogenannten "Wickelkopf" evolventenförmig aus den Nuten aus. Dort sind die einzelnen Stäbe zur Statorwicklung verschaltet (d.h. miteinander kontaktiert).

Die im Blechpaket einliegenden Stäbe bzw. Stabbereiche liegen auf hohem elektrischem Potential und sind daher untereinander, sowie gegen das geerdete Blechpaket durch eine Hauptisolierschicht elektrisch isoliert.

Um bei Betriebsspannungen von einigen Kilovolt (kV) Teilentladungen zu vermeiden, ist die Hauptisolierschicht üblicherweise mit einer inneren und einer äußeren Leitschicht gegen Hohlräume und Ablösungen abgeschirmt. Die innere Leitschicht ist als "innere Potentialsteuerung" (IPS) bezeichnet und liegt auf dem Potential des Stabes. Die äußere Leitschicht ist als "Außenglimmschutz" (AGS) bezeichnet und liegt auf Erdpotential. Das elektrische Potential wird in der Hauptisolierschicht ausgehend von der IPS in radialer Richtung bis zum AGS abgebaut.

Der Außenglimmschutz hat die zentrale Aufgabe, die Hauptisolierung an das geerdete Blechpaket so anzubinden, dass möglichst das vollständige Hochspannungspotential über der Hauptisolierschicht abgebaut wird. Dabei soll die Belastung durch das elektrische Feld über der Hauptisolierschicht möglichst homogen sein.

Zur Herstellung der Hauptisolierschicht wird in einem gängigen, sogenannten GVIP ("Global Vacuum Pressure Impregnation")-Verfahren der gesamte Ständer in ein Imprägnierharz getränkt. Durch die Tränkung des Stators verklebt der Leiterstab inklusive des Außenglimmschutzes mit dem angrenzenden Blechpaket in der Nut.

Im Betrieb des Generators wirken jedoch durch unterschiedliche thermische Ausdehnungskoeffizienten des Blechpaketes, des Kupfers des Leiterstabs und der Hauptisolierschicht thermische und mechanische Kräfte beim Hochfahren und beim Herunterfahren des Generators auf den Leiterstab.

Durch solche thermomechanische Spannungen im Grenzbereich der Außenseite der Hauptisolierschicht und des Blechpakets kann es bei einer festen mechanischen Verbindung zu einer Delamination des Außenglimmschutzes kommen, die zum Auftreten von Teilentladungen führen kann, wenn im Bereich der Fehlstellen elektrische Potentialunterschiede bestehen. Um dies auszuschließen, ist bei der Herstellung von Generatoren mittels des GVPI-Verfahrens in einer herkömmlichen Bauform vorgesehen, dass der Außenglimmschutz zwei leitfähige Schichten umfasst, wobei zwischen äußerer und innerer AGS-Schicht eine Trennschicht in Form eines Spaltglimmerbandes definiert ist. Diese bricht bei mechanischer Belastung als Sollbruchstelle auf, so dass der Leiterstab längs der Nut einen Bewegungsspielraum erhält. Äußere und innere AGS-Schicht werden durch ein einseitig durchgewebtes Leitvlieskontaktband elektrisch miteinander verbunden. Die Kontaktierung der Isolierung erfolgt somit periodisch mit der Breite der Bänder. Ein solcher Außenglimmschutz ist beispielsweise aus der EP 0 603 212 B1 bekannt. Nachteiligerweise weist ein solcher Außenglimmschutz eine vergleichsweise große Schichtdicke auf.

Aufgabe der Erfindung ist es, einen Außenglimmschutz für eine elektrische Maschine anzugeben, welcher zur Verwendung in einem nach dem GVPI-Verfahren vollimprägnierten Stator besonders gut geeignet ist.

Diese Aufgabe wird erfindungsgemäß gelöst durch die Merkmale des Anspruchs 1. Demnach ist ein doppellagiger Außenglimmschutz für einen mit einer Hauptisolierschicht ummantelten Leiterstab einer elektrischen Maschine vorgesehen. Der Außenglimmschutz umfasst eine erste Lage, welche die Hauptisolierschicht ummantelt, sowie eine zweite Lage, welche wiederum die erste Lage ummantelt. In einem Montagezustand eines mit dem Außenglimmschutz versehenen Leiterstabs grenzt somit die erste Lage des Außenglimmschutzes an die Hauptisolierschicht an, während die zweite Lage des Außenglimmschutzes an das Blechpaket angrenzt.

Jede der beiden Lagen besteht im Wesentlichen aus einer elektrisch leitfähigen, imprägnierbaren Schicht, welche jeweils mit einer Gleitschicht versehen ist. Dabei sind die beiden Lagen so zueinander ausgerichtet, dass ihre jeweiligen Gleitschichten einander zugewandt sind. Erfindungsgemäß weist jede der Gleitschichten jeweils mindestens eine Aussparung, bevorzugt aber eine Vielzahl von Aussparungen, auf. Die beiden leitfähigen Schichten der beiden Lagen sind hierbei durch die oder jede Aussparung hindurch mittels jeweils einer dauerhaft elastischen (insbesondere viskoeleastischen) und elektrisch leitenden Verbindung mechanisch und elektrisch leitend verbunden.

Im Querschnitt ist ein mit dem Außenglimmschutz versehener Leiterstab somit in Radialrichtung von innen nach außen gesehen folgendermaßen aufgebaut: Im Inneren befindet sich der elektrisch leitfähige Leiterstab, welcher von der Hauptisolierschicht ummantelt ist. Daran angrenzend folgt die leitfähige Schicht der ersten Lage des Außenglimmschutzes, an die wiederum die Gleitschicht dieser ersten Lage folgt. Wiederum daran angrenzend folgt zunächst die Gleitschicht der zweiten Lage des Außenglimmschutzes sowie als äußere Schicht deren leitfähige Schicht.

Als "elektrisch leitfähig" wird dabei insbesondere auch ein elektrisch "halbleitendes" oder "schwachleitendes" Material verstanden, also ein Material mit einem begrenzten (d.h. endlichen) elektrischen Quadratwiderstand, insbesondere etwa in einem Bereich zwischen 10 kΩ und 200 kΩ.

Als "Gleitschicht" wird eine (feste) Materialschicht mit einem geringen Gleit- bzw. Haftreibungskoeffizienten (insbesondere im Bereich zwischen etwa 0,01 und 0,09, insbesondere etwa 0,04) bezeichnet, die von dem im GVPI-Verfahren einzusetzenden Tränkharz nicht, oder nur kaum benetzt wird, und die somit keine (haltfähige) stoffschlüssige Verbindung mit dem ausgehärteten Tränkharz eingeht. Bei der Gleitschicht handelt es sich insbesondere um ein hydrophobes Material. Durch die einander zugewandten Gleitschichten werden die beiden Lagen des Außenglimmschutzes durch das Tränkharz nicht, oder nur in schwachem, zerstörungsfrei überwindbaren miteinander verbunden. Somit können die Lagen zum Ausgleich von thermomechanischen Spannungen in gewissem Umfang aufeinander gleiten, wodurch eine Beschädigung der Lagen vermieden wird. Die oder jede elastische und leitende Verbindung stellt dabei - auch bei einer Relativverschiebung der Lagen zueinander - einen definierten elektrischen Kontakt zwischen den Lagen sicher.

Hierdurch kann vorteilhafterweise eine Sollbruchschicht zwischen den Lagen entfallen, wodurch der erfindungsgemäße Außenglimmschutz mit besonders geringer Schichtdicke aufgebaut sein kann.

Vorteilhafterweise wird durch den erfindungsgemäßen Außenglimmschutz einerseits die notwendige mechanische Entkopplung der beiden Lagen realisiert, andererseits jedoch die gleichfalls notwendige elektrische Verbindung zwischen den Lagen sicherstellt. Zudem wird die Durchimprägnierung der Hauptisolierschicht begünstigt.

In besonders bevorzugter Ausführungsform ist die elastische und leitende Verbindung durch eine Klebeverbindung realisiert, welche zweckmäßigerweise durch einen elektrisch leitfähigen Klebstoff, insbesondere durch ein elektrisch leitfähiges Silikon oder einen elektrisch leitfähigen Epoxidklebstoff hergestellt ist. Ein geeigneter Klebstoff wird beispielsweise unter dem Markennamen "Loctite 3880" vertrieben. Die leitfähige Schicht ist vorzugsweise durch ein imprägnierbares Band gebildet, welches wiederum insbesondere aus einem Vlies, vorzugsweise aus einem Gewebe gefertigt ist.

Die oder jede Gleitschicht ist in zweckmäßiger Ausgestaltung aus Polytetrafluorethylen (PTFE, z.B. vertrieben unter dem Markennamen "Teflon") hergestellt.

In einer herstellungstechnisch bevorzugten Ausführungsform ist die oder jede Aussparung durch einen Ätzvorgang hergestellt. Die Aussparungen sind somit vorzugsweise durch freigeätzte Stellen in der Gleitschicht gebildet.

In bevorzugter Dimensionierung weist der Außenglimmschutz (d.h. die beiden Lagen zusammen) eine Gesamtstärke von etwa 0,3 mm auf.

Das erfindungsgemäße Glimmschutzband zur Herstellung eines Außenglimmschutzes gemäß einer der vorgenannten Ausführungsformen umfasst eine erste Lage, sowie eine zweite flächig auf der ersten Lage aufliegende zweite Lage, wobei jede der Lagen jeweils eine leitfähige, imprägnierbare Schicht umfasst, welche jeweils mit einer Gleitschicht versehen ist. Dabei sind die Gleitschichten der beiden Lagen einander zugewandt. Jede der Gleitschichten weist jeweils mindestens eine Aussparung, bevorzugt eine Vielzahl von Aussparungen auf, wobei die beiden leitfähigen Schichten durch diese Aussparungen hindurch mit Hilfe einer dauerhaft elastischen und leitenden Verbindung mechanisch und elektrisch leitend miteinander verbunden sind.

In bevorzugter Dimensionierung weist das Glimmschutzband eine Breite von etwa 2 cm bis 3,5 cm auf.

Die erfindungsgemäße elektrische Maschine umfasst mindestens einen mit einer Hauptisolierschicht ummantelten Leiterstab, wobei die Hauptisolierschicht wiederum von einem vorstehend beschriebenen Außenglimmschutz ummantelt ist. Dabei ist der Außenglimmschutz in besonders bevorzugter Ausführungsform durch Umwickeln des Leiterstabs mit dem vorstehend beschriebenen Glimmschutzband hergestellt. Die Bewicklung des Leiterstabs kann dabei einerseits mit einer gewissen Überlappung erfolgen. Bevorzugt ist jedoch vorgesehen, dass das Glimmschutzband "auf Stoß" um den Leiterstab gewickelt ist, d.h. dass sich die einzelnen Umwicklungen nicht überlappen.

Diese Variante zeichnet sich durch eine besonders einfache Applikation des Außenglimmschutzes aus, da die Anzahl der Produktionsschritte im Vergleich zu einem eingangs beschriebenen herkömmlichen doppellagigen Außenglimmschutz reduziert wird.

Nachfolgend wird ein Ausführungsbeispiel der Erfindung anhand einer Zeichnung näher erläutert. Darin zeigen:
- FIG 1: in einer grob schematisch vereinfachten Darstellung einen Ausschnitt aus einer elektrischen Maschine mit einem von einer Hauptisolierschicht ummantelten Leiterstab, der einen Teil einer Statorwicklung bildet, wobei die Hauptisolierschicht mit einem doppellagigen Außenglimmschutz versehen ist, und
- FIG 2: in einem vergrößerten Ausschnitt aus FIG 1, den doppellagigen Außenglimmschutz.

Einander entsprechende Teile und Größen sind in allen Figuren stets mit den gleichen Bezugszeichen versehen.

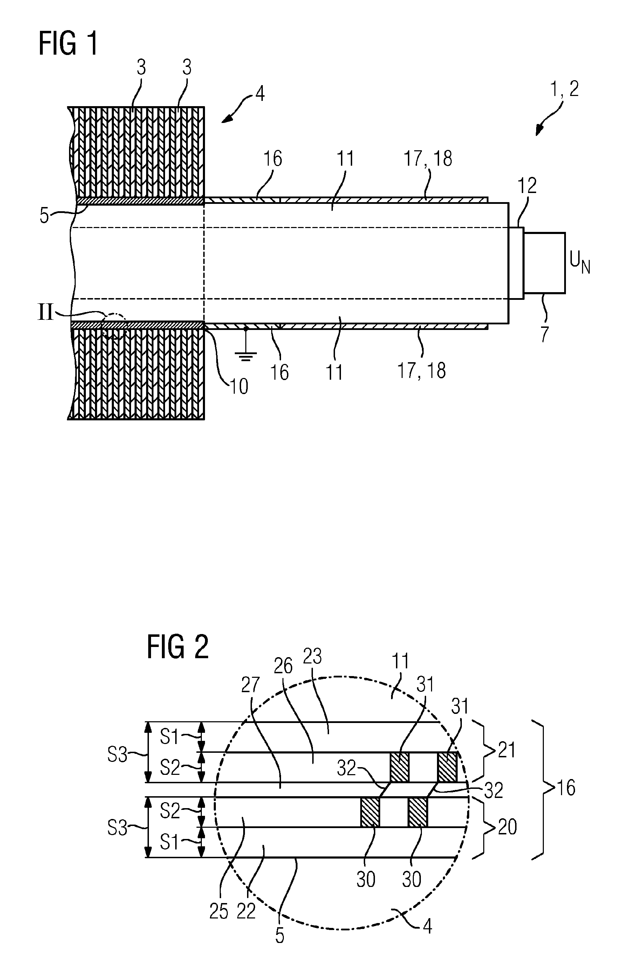

FIG 1 zeigt in einer stark vereinfachten Darstellung einen Ausschnitt aus einer elektrischen Maschine 1, hier eines Drehstrom-Turbogenerators. Die Maschine 1 umfasst einen Stator 2 (auch als Ständer bezeichnet), in dem ein (nicht explizit dargestellter) Rotor drehbar gelagert ist.

Der Stator 2 umfasst ein aus einer Vielzahl von aneinander gereihten, und untereinander isolierten Blechplatten 3 gebildetes (Stator-)Blechpaket 4. In das Blechpaket 4 sind in an sich bekannter Weise quer zur Flächenausdehnung der Blechplatten 3 mehrere durchgehende (Längs-)Nuten 5 eingebracht, von denen in FIG 1 aus Gründen der Vereinfachung lediglich eine dargestellt ist. In jeder Nut 5 liegt ein Leiterstab 7 ein. Jeder Leiterstab 7 ist (in nicht explizit dargestellter Weise) wiederum aus mehreren gegeneinander isolierten Kupfer-Teilleitern gebildet, die zur Bildung eines sogenannten Roebelstabs miteinander verdrillt sind.

An einem Nutaustritt 10 ragt der Leiterstab 7 aus der Nut 5 heraus.

Zur Isolierung des unter Betriebsbedingungen mit einer elektrischen Hochspannung U_{N} beaufschlagten Leiterstabs 7 gegenüber dem geerdeten Blechpaket 4 ist dieser umfänglich zur Ausbildung einer Hauptisolierschicht 11 mit einem in einem Vakuumtränkverfahren (Global Vacuum Pressure Impregnation) mit einem aushärtbaren Tränkharz getränkten Glasseiden-Glimmerband umwickelt.

Um die Bildung von Potentialspitzen zu vermeiden, und somit die Entstehung von Teilentladungen zu reduzieren, ist der Leiterstab 7 innerhalb der Hauptisolierschicht 11 mit einer durch ein Leitvlies gebildeten Innenpotentialsteuerung 12 versehen. Zudem ist die Hauptisolierschicht 11 zumindest innerhalb des Blechpakets 4 außenseitig mit einem doppellagigen Außenglimmschutz 16 versehen. Der Außenglimmschutz 16 ist etwas über den Nutaustritt 10 hinaus fortgeführt, steht also geringfügig aus dem Blechpaket 4 hervor.

Um die Entstehung einer Gleitanordnung zu vermeiden, ist in der Verlängerung des Außenglimmschutzes 16 ein Endenglimmschutz 17 auf die Hauptisolierschicht 11 aufgebracht, welcher durch eine halbleitfähige Schicht 18 gebildet ist, deren Oberflächenwiderstand in Axialrichtung des Leiterstabs 7 ortsabhängig variiert.

In FIG 2 ist ein Detail II der FIG 1 vergrößert dargestellt, anhand dessen der Aufbau des doppellagigen Außenglimmschutzes 16 schematisch erläutert ist.

Der Außenglimmschutz 16 umfasst eine erste Lage 20, welche zumindest in dem Teilbereich des Leiterstabs 7, der in der Nut 5 vergossen ist, an das Blechpaket 4 angrenzt. Zudem umfasst der Außenglimmschutz 16 eine zweite Lage 21, welche an die Hauptisolierschicht 11 angrenzt. Die erste Lage 20, sowie die zweite Lage 21 sind dabei gleichartig aufgebaut. Jede Lage 20,21 umfasst eine halbleitfähige Schicht, welche hier aus einem durch das Tränkharz imprägnierbares Gewebeband 22 bzw. 23 gebildet ist. Die jeweilige Gewebeband 22 bzw. 23 beider Lagen 20 und 21 besteht hierbei jeweils aus Polyester oder Glasfasern.

Bei jeder der Lagen 20,21 ist das Gewebeband 22,23 mit einer Gleitschicht, hier mit einer (überdimensional dargestellten) Teflonbeschichtung 25 bzw. 26 beschichtet. Dabei weist das jeweilige Gewebeband 22,23 jeweils eine Stärke S1 von ca. 20 bis 100 µm, insbesondere ca. 40 µm auf, während die jeweilige Teflonbeschichtung 25,26 jeweils eine Stärke S2 von ca. 10 bis 80 µm, insbesondere ca. 20 µm aufweist. Die beiden Lagen 20,21 weisen eine Gesamtstärke S3 von etwa 0,3 mm auf.

Wie FIG 2 zu entnehmen ist, sind die beiden Teflon-Beschichtungen 25,26 der ersten bzw. der zweiten Lage 20,21 einander zugewandt, während die beiden Gewebebänder 22,23 voneinander abgewandt sind. Aus FIG 2 ist zudem angedeutet, dass jede der beiden Lagen 20,21 des Außenglimmschutzes 16 einseitig, nämlich auf der Seite des jeweiligen Gewebebandes 22,23 durch den GVPI-Prozess fest mit dem Blechpaket 4 bzw. der Hauptisolierschicht 11 verbunden ist. Die Teflonbeschichtungen 25,26 sind dagegen in dem GVPI-Prozess kaum oder gar nicht mit dem Tränkharz benetzt, wodurch sich zwischen den beiden Teflonbeschichtungen 25,26 ein (wiederum überdimensional dargestellter) Spalt 27 ausbildet. Hierdurch sind die beiden Lagen 20,21 in Axialrichtung des Leiterstabs 7 innerhalb eines gewissen Spiels frei gegeneinander beweglich.

In jeder der Teflonbeschichtungen 25,26 ist jeweils eine Vielzahl von Aussparungen 30 bzw. 31 freigeätzt. Dabei korrespondiert jeweils eine Aussparung 30 der ersten Lage 20 mit einer Aussparung 31 der zweiten Lage 21 des Außenglimmschutzes 16. Der Übersichtlichkeit halber sind jeweils nur zwei Aussparungen 30,31 dargestellt. Jeweils zwischen zwei korrespondierenden Aussparungen 30,31 ist eine Klebeverbindung 32 aus einem dauerhaft viskoelastischen, elektrisch leitfähigen Klebstoff hergestellt, wobei hier der Klebstoff "Loctite 3880" eingesetzt ist. Durch diese Klebeverbindungen 32 ist das Gewebeband 22 der ersten Lage 20 mit dem Gewebeband 23 der zweiten Lage 21 des Außenglimmschutzes 16 elektrisch leitend verbunden, wobei diese leitende Verbindung bedingt durch die Elastizität des Klebstoffs auch bei einem betriebsbedingten Spiel der beiden Lagen 20,21 gegeneinander bestehen bleibt.

## Patentansprüche

1. Außenglimmschutz (16) für einen mit einer Hauptisolierschicht (11) ummantelten Leiterstab (7) einer elektrischen Maschine (1),
mit einer ersten Lage (21), welche die Hauptisolierschicht (11) ummantelt, sowie mit einer zweiten Lage (20), welche wiederum die erste Lage (21) ummantelt,
wobei jede der Lagen (20,21) eine leitfähige, imprägnierbare Schicht (22,23) umfasst, welche jeweils mit einer Gleitschicht (25,26) versehen ist,
wobei die Gleitschichten (25,26) der beiden Lagen (20,21) einander zugewandt sind,
wobei jede der Gleitschichten (25,26) jeweils mindestens eine Aussparung (30,31) aufweist, und wobei durch diese Aussparungen (30,31) hindurch die beiden leitfähigen Schichten (22,23) mit Hilfe einer dauerhaft elastischen, elektrisch leitenden Verbindung (32) miteinander mechanisch und elektrisch verbunden sind.

2. Außenglimmschutz (16) nach Anspruch 1,
wobei die elastische, elektrisch leitende Verbindung durch eine Klebeverbindung (32) gebildet ist.

3. Außenglimmschutz (16) nach Anspruch 2,
wobei die Klebeverbindung (32) durch einen leitfähigen Klebstoff, insbesondere ein elektrisch leitfähiges Silikon oder einen elektrisch leitfähigen Epoxidklebstoff hergestellt ist.

4. Außenglimmschutz (16) nach einem der Ansprüche 1 bis 3, wobei jede der Gleitschichten (25,26) eine Vielzahl von Aussparungen (30,31) aufweist,
wobei die beiden leitfähigen Schichten (22,23) durch diese Aussparungen (30,31) hindurch mit Hilfe einer Vielzahl von dauerhaft elastischen, elektrisch leitenden Verbindungen (32) miteinander verbunden sind.

5. Außenglimmschutz (16) nach einem der Ansprüche 1 bis 4, wobei mindestens eine der leitfähigen Schichten (22, 23) durch ein Band gebildet, welches insbesondere aus einem Gewebe gefertigt ist.

6. Außenglimmschutz (16) nach einem der Ansprüche 1 bis 5, wobei mindestens eine der Gleitschichten (25,26) aus Polytetrafluorethylen hergestellt ist.

7. Außenglimmschutz (16) nach einem der Ansprüche 1 bis 6, wobei mindestens eine der Aussparungen (30,31) durch einen Ätzvorgang hergestellt ist.

8. Außenglimmschutz (16) nach einem der Ansprüche 1 bis 7, wobei die Lagen (20,21) zusammen eine Gesamtstärke (S3) von etwa 0,3 mm aufweisen.

9. Glimmschutzband zur Herstellung eines Außenglimmschutzes (16) gemäß einem der Ansprüche 1 bis 8,
mit einer ersten Lage (20), sowie mit einer zweiten flächig auf der ersten Lage (20) aufliegenden zweiten Lage (21), wobei jede der Lagen (20,21) eine leitfähige, imprägnierbare Schicht (22,23) umfasst, welche jeweils mit einer Gleitschicht (25,26) versehen ist,
wobei die Gleitschichten (25,26) einander zugewandt sind, wobei jede der Gleitschichten (25,26) jeweils mindestens eine Aussparung (30,31) aufweist, und
wobei durch diese Aussparungen (30,31) hindurch die beiden leitfähigen Schichten (22,23) mit Hilfe einer dauerhaft elastischen, elektrisch leitenden Verbindung (32) miteinander verbunden sind.

10. Elektrische Maschine (1) mit einem mit einer Hauptisolierschicht (11) ummantelten Leiterstab (7),
wobei die Hauptisolierschicht (11) mit einem Außenglimmschutz (16) gemäß einem der Ansprüche 1 bis 8 versehen ist.

11. Elektrische Maschine (1) nach Anspruch 10,
wobei der Außenglimmschutz (16) durch Umwickeln des Leiterstabs (7) mit dem Glimmschutzband gemäß Anspruch 9 hergestellt ist.
